# EUROPEAN PATENT APPLICATION

(11) **EP 2 963 288 A1**
(43) Date of publication of application: **06.01.2016**
(21) Application number: 15175165.8
(22) Date of filing: 03.07.2015
(51) Int. Cl.: F03D 7/02

(54) **DOWNWIND TYPE WINDTURBINE AND METHOD OF STOPPING SUCH WINDTURBINE**

(30) Priority: 03.07.2014 JP 2014137390
(71) Applicant: Hitachi, Ltd., Tokyo 100-8280 (JP)
(72) Inventor: TOBINAGA, Ikuo, Tokyo, 100-8280 (JP); KIYOKI, Souichiro, Tokyo, 100-8280 (JP)
(74) Representative: MERH-IP Matias Erny Reichl Hoffmann Patentanwälte PartG mbB

(57) **Abstract**

A downwind type windturbine and a method of stopping the same are provided. The load acting on blades 1 when the windturbine is stopped can be reduced by an elaborative control of a pitch angle of the blades. When stopping the downwind type windturbine, the pitch angle is changed in a direction to increase an inflow angle to bring the blades 1 to a feathering state with the trailing edge of the blades 1 positioned upwind (negative feathering). When the pitch angle (or a state quantity correlating with the pitch angle, such as wind velocity) exceeds a predetermined value when stopping the windturbine, instead of the negative feathering, the pitch angle is changed in a direction to decrease the inflow angle to bring the blades 1 to the feathering state with the trailing edge of the blades 1 positioned downwind (positive feathering) via the inflow angle of zero degree.

## Description

### [Technical Field]

The present invention relates to a downwind type windturbine and a method of stopping such windturbine and, in particular, to a downwind type windturbine in which the pitch angles of blades can be varied and a method of stopping such windturbine.

### [Background Art]

In recent years, windturbines (wind power generators) attract attention as a power generation method that is safe for environment and less risky. On the other hand, their power generation cost is high and it is required to reduce the cost more, while ensuring safety.

To reduce the cost of a windturbine, it is effective to reduce the material cost by lessening the weights of structural members of the windturbine. Particularly, reducing the mass of blades is of high importance, since it also contributes to lessening the weight of a nacelle that supports the blades and the weight of a tower that supports the nacelle. While structural conditions of the blades mainly depend on aerodynamic characteristics and design conditions, lessening the weight of a blade structure can be achieved by decreasing a design load.

Until now, contriving how the turbine blades should be set in standby position when subjected to tremendous wind by controlling a pitch angle and a yaw angle, thereby alleviating a design load under tremendous wind is proposed, for example, as described in Japanese Unexamined Patent Application Publications No. 2006-336505, No. 2007-64062, and No. 2007-16628.

### [Citation List]

[Patent Literature 1] JP 2006-336505 A
[Patent Literature 2] JP 2007-064062 A
[Patent Literature 3] JP 2007-016628 A

### [Summary of the Invention]

### [Technical Problem]

Heretofore, approaches have been pursued for alleviating a design load by contriving how the turbine blades should be set in standby position when subjected to tremendous wind, but no particular considerations have been made in reducing the load that is applied to a windturbine (especially, blades) in a process of windturbine stopping, when stopping the windturbine by one of a variety of causes. That is, in the manner heretofore practiced, when stopping
a windturbine, a pitch angle of blades is controlled to bring the blades to a feathering state. Specifically, the pitch angle is turned in a direction to decrease a relative inflow angle (a relative inflow angle of wind incident on the blades, which is hereinafter simply referred to as an inflow angle), with the result that the inflow angle passes through zero degree and the blades eventually come to the feathering state (eventually, the trailing edge of the blades are positioned downwind).

According to an examination made by the present inventors, we found that, by an elaborative control of a pitch angle of the blades when stopping a downwind type windturbine, it is possible to reduce the load acting on the blades when stopping the windturbine.

An object of the present invention is to provide a downwind type windturbine and a method of stopping such windturbine in which it is possible to reduce the load acting on the blades in a process of windturbine stopping by an elaborative control of a pitch angle in a downwind type windturbine in which the pitch angles of the blades can be varied.

### [Solution to Problem]

The present invention is characterized in that, when stopping a downwind type windturbine with blades whose pitch angle is controllable, a pitch angle of the blades is turned in a direction to increase an inflow angle to bring the blades to a feathering state (eventually, the trailing edge of the blades are positioned upwind).

In the present specification, a manner of pitch angle control in which the blades is turned in a direction to increase an inflow angle to bring the blades to a feathering state with the trailing edge of the blades positioned upwind is referred as "negative feathering". In the present specification, a typical manner of feathering, that is, a manner of pitch angle control in which the blades is turned in a direction to decrease the inflow angle, with the result that the inflow angle passes through zero degree and the blades come to a feathering state with the trailing edge of the blades positioned downwind, is referred to as "positive feathering".

The present invention is also characterized by carrying positive feathering instead of negative feathering to stop the windturbine, when a pitch angle of the blades (or a state quantity correlating with pitch angle, such as wind velocity) exceeds a predetermined value when stopping the windturbine.

### [Advantageous Effects of Invention]

According to the present invention, it becomes feasible to reduce the load (fluid force) applied to the blades in a process of windturbine stopping in a downwind type windturbine in which the pitch angles of the blades can be varied.

Challenges, configurations, and advantageous effects which are other than noted above will be clarified from the following description of embodiments.

### [Brief Description of the Drawings]

Fig. 1 is a diagram depicting the equipment structure of a windturbine to which the present invention is applied and components to be controlled;
Fig. 2A is a layout diagram of an upwind type windturbine;
Fig. 2B is a layout diagram of a downwind type windturbine;
Fig. 3A is a diagram explaining fluid force acting on blades, when positive feathering is carried out to stop an upwind type windturbine;
Fig. 3B is a diagram explaining fluid force acting on blades, when positive feathering is carried out to stop a downwind type windturbine;
Fig. 3C is a diagram explaining a direction in which fluid force is generated, when positive feathering is carried out to stop a windturbine;
Fig. 4 is a diagram explaining fluid force acting on blades during negative feathering;
Fig. 5 is a diagram depicting a control block of a first embodiment of the present invention;
Fig. 6 is a diagram explaining selectively using either negative feathering or positive feathering;
Fig. 7 is a diagram depicting a control block of a second embodiment of the present invention;
Fig. 8 is a diagram depicting a control block of a third embodiment of the present invention; and
Fig. 9 is a diagram depicting a control block of a fourth embodiment of the present invention.

### [Description of Embodiments]

In the following, embodiments of the present invention will be described with the aid of the drawings.

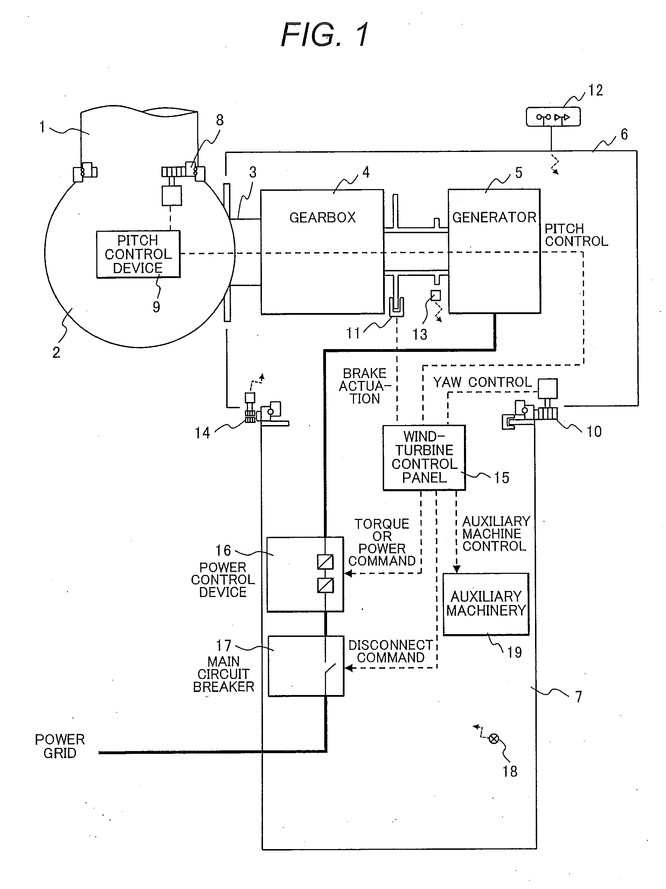

First, an example of equipment structure of a windturbine to which the present invention is applied and components to be controlled is described with Fig. 1. A large-scale wind power generator (with a rated output of 100 kW or more) to which the present invention is applied basically performs unattended automatic operation and connects to a power grid to which the generated electric power is supplied.

The windturbine includes a plurality of blades 1, a hub 2 on which the blades 1 are installed, a main shaft 3 which is connected to the hub 2, a gearbox 4 which increases the revolving speed of the main shaft 3, a generator 5 which is connected to the gearbox 4 and generates electric power, a nacelle 6 which supports the main shaft 3 rotatably and houses the gearbox 4 and the generator 5, and a tower 7 which supports the nacelle 6 rotatably.

The windturbine also includes an anemometer 12, a revolving speed sensor 13 which measures the revolving speed of the generator 5, a yaw angle sensor 14 which measures the yaw angle of the nacelle 6, among others, and the outputs of these sensors are sent to a windturbine control panel 15 installed inside the tower 7.

The windturbine control panel 15 controls components to be controlled within the windturbine according to a control command from outside and the outputs of the sensors and makes the windturbine perform unattended automatic operation. The components to be controlled are as follows: a pitch control device 9 (pitch drive mechanism 8), a yaw drive mechanism 10, a power control device 16, a main circuit breaker 17, and auxiliary machinery 19 (which includes, e.g., a rotor brake 11 and others such as a hydraulic unit and a cooling unit which are omitted from depiction), among others. The pitch control device 9 (pitch drive mechanism 8) changes the angle of the blades 1. The yaw drive mechanism 10 changes the orientation of the nacelle 6 as a whole. The power control device 16 adjusts the electric power (or rotational torque) of the windturbine. The main circuit breaker 17 is responsible for electrical connection to the power grid.

The windturbine supervises the states of its components by way of the sensors. In case an abnormality has been detected by the windturbine control panel 15 or power generation is manually discontinued by windturbine operating personnel (pressing an Emergency Stop button 18, which in turn sends a stop command to the windturbine control panel 15), a stop operation is performed. The present invention concerns control of the wind power generator, particularly, control that is executed by the windturbine control panel 15 and the pitch control device 9 in this stop operation.

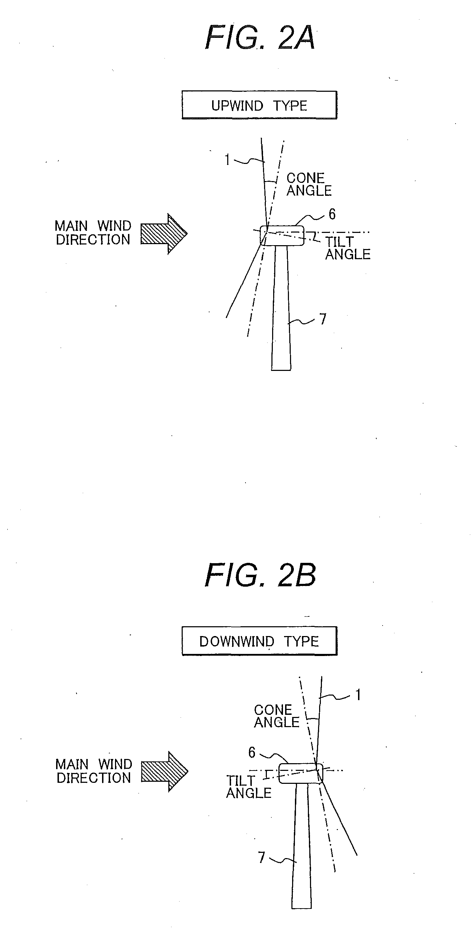

Then, background to the development of the present invention is described with Figs. 2A to 4 and Fig. 6.

While the present invention is intended to reduce the fluid force acting on the blades when a downwind type windturbine is stopped, the following descriptions also includes a discussion on how fluid force acts on the blades when a upwind type windturbine is stopped for the sake of facilitating understanding.

First, according to position of a rotor (blades and hub), windturbines (wind power generators) can be classified into an upwind type windturbine (Fig. 2A) in which the rotor is located upwind relative to the tower 7 and a downwind type windturbine (Fig. 2B) in which the rotor is located downwind relative to the tower 7. While upwind type windturbines are more commonly used, downwind type windturbines with less risk that the blades 1 may touch the tower 7 in a large-scale windturbine also attract attention and manufactured in some countries. In either type, the rotor of the windturbine is configured to have an inclination of a rotor axis (tilt angle) and an inclination of a rotor plane (cone angle) to keep a constant distance between the blades 1 and the tower 7, as is depicted in Figs. 2A and 2B.

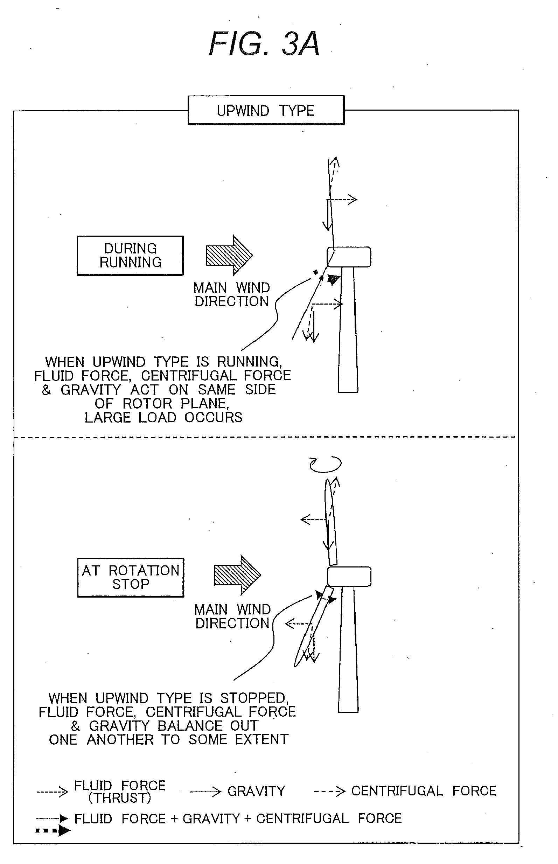

Then, how fluid force acts on the blades when positive feathering is carried out as in the manner heretofore practiced when stopping the windturbine is described with Figs. 3A to 3C.

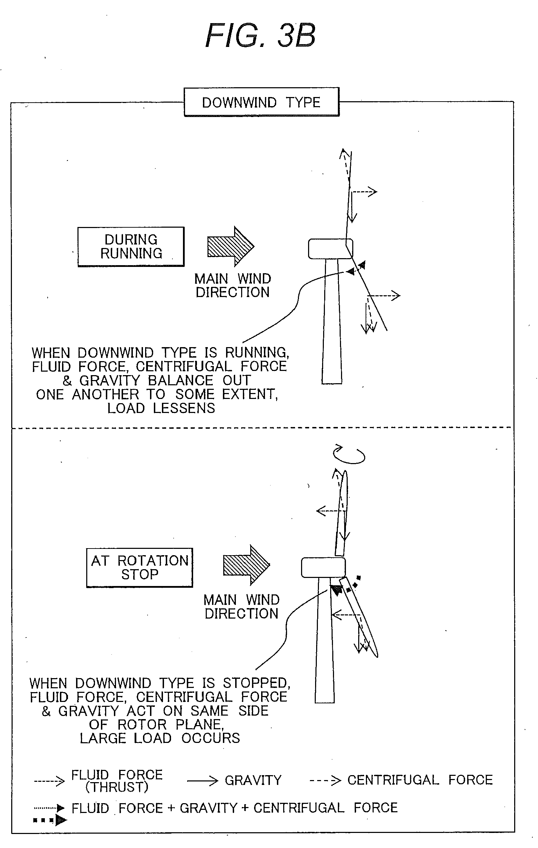

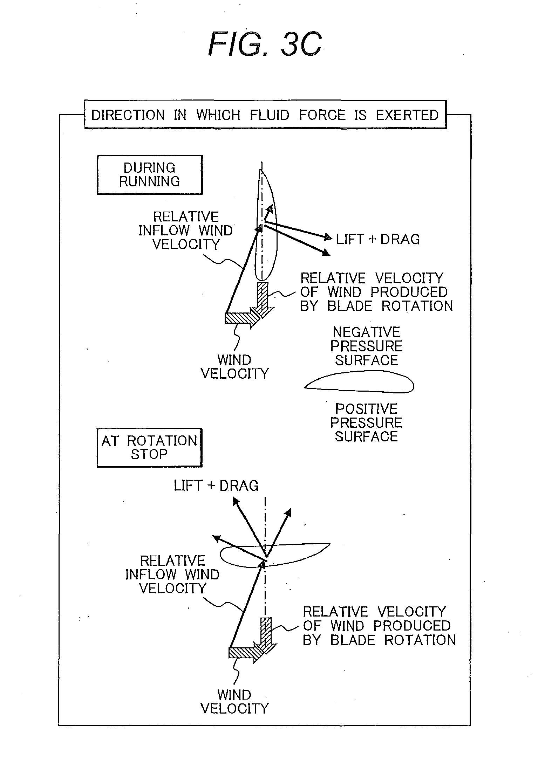

When the windturbine is running, in both the upwind type windturbine (Fig. 3A) and the downwind type windturbine (Fig. 3B), the rotor (blades) is subjected to loads exerted in a rotational direction and a downwind direction, which are produced by fluid force consisting of lift and drag which are generated around the blades by wind and the rotor rotation (see Fig. 3C). At the same time, gravity exerted vertically downward and centrifugal force which is exerted in a direction to decrease the cone angle are also generated. When vectors of each force are depicted, in the upwind type windturbine, vectors of loads exerted on the rotor in the out-of-plane (rotor plane) directions, which correspond to the fluid force (thrust), centrifugal force, and gravity, are exerted on a same side of the rotor plane. On the other hand, in the downwind type windturbine, the centrifugal force is exerted in the out-of-plane direction on a side of the rotor plane, which is opposite to another side of the rotor plane on which fluid force (thrust) is exerted. Thus, these forces balance out one another. Consequently, the load acting on the blades of the downwind type windturbine is smaller when the windturbine is running and the downwind type windturbine is advantageous in designing a blade structure.

However, when the windturbine is stopped, there is an inverse relation between the upwind type and the downwind type. When the windturbine is stopped, typically, the pitch angle is turned in a direction to decrease the relative inflow wind velocity (in a positive feathering direction), which generates lift on a positive pressure surface of a blade. In turn, by generating the fluid force vector in a direction opposite to a rotor running direction and in the upwind side, braking force is generated (see Fig. 3C, where the trailing edge of the blades when feathered are positioned downwind). Due to this change of the direction of the fluid force (thrust) when the windturbine is stopped, in the upwind type windturbine (Fig. 3A), the fluid force and the centrifugal force balance out and the load acting on the blades becomes smaller. On the other hand, in the downwind type windturbine (Fig. 3B), the out-of-plane vectors of fluid force and centrifugal force are exerted on a same side of the rotor plane. Thus, these forces are added up and the load acting on the blades becomes larger.

Consequently, while the load acting on the blades of the downwind type windturbine when running tends to become smaller than that in the upwind type windturbine, the blades are subject to a larger load produced when the windturbine is stopped than in the upwind type windturbine. Therefore, the downwind type windturbine has a problem in which a design load on the blades cannot be reduced and its structural merit cannot be exploited, when it is stopped.

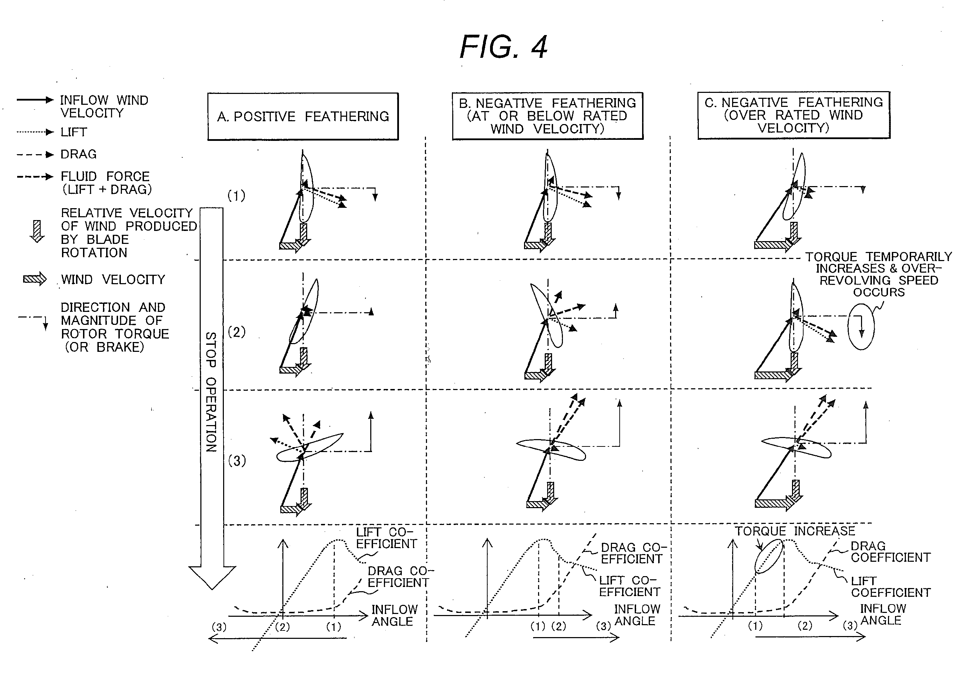

Because of this problem, in the present invention, it is arranged to reverse the direction of truing the blade (the changing direction of the pitch angle) when stopping the windturbine and move the blades to a feathering state (negative feathering). Fluid force acting on the blades when negative feathering is carried out is described with Fig. 4. For the sake of facilitating understanding, fluid force acting on the blades when positive feathering (A) is carried out is also depicted.

Negative feathering (B, C) is a method in which the blade is turned (the pitch angle is changed) in a direction to increase the inflow angle; this stalls the rotation of the blades, decreases the left, and increases the drag, thereby applying braking force, while generating fluid force in an out-of-plane direction in the downwind side. Because the fluid force is generated in an out-of-plane direction in the downwind side, when the downwind type windturbine is stopped by negative feathering, the fluid force (thrust) is exerted in a downwind direction that is opposite to the direction of the fluid force (thrust) depicted in Fig. 3B. Thus, due to this change of the direction of the fluid force (thrust) when the windturbine is stopped, in the downwind type windturbine, the fluid force (thrust) and the centrifugal force balance out and the load acting on the blades becomes smaller. Consequently, while exploiting the advantage of the downwind type windturbine having a structural merit in which the load acting on the blades during running is smaller than that in the upwind type windturbine, it is possible to reduce the load acting on the blades even when the windturbine is stopped. Thus, a design load on the blades can be reduced. It is feasible to reduce the load acting on the blades, both when the windturbine is running and when it is stopped, the structural strength of the blades can be lowered, and the blades can be made lightweight. Making the blades lightweight can lead to reduction in the weights of the nacelle which supports the rotor (with the blades and hub), the tower which supports the nacelle, and a foundation structure which supports the tower and, in consequence, can significantly contribute to cost reduction of a wind power generation facility.

For the upwind type windturbine, negative feathering, if carried out to stop the windturbine, increases the load acting on the blades conversely. That is, when the fluid force (thrust) is exerted in a downwind direction by carrying out negative feathering, its vector and the out-of-plane vectors of centrifugal force and gravity are exerted on a same side of a rotor plane, as is shown in Fig. 3A. Thus, these forces are added up and the load acting on the blades becomes larger. Therefore, it can be said that the present invention is a technical idea that is specific to a downwind type windturbine.

According to an examination made by the present inventors, pitch angle control by negative feathering, described above, may have a problem as below. Let us explain this with reference to "C. Negative Feathering (Over Rated Wind Velocity)" in Fig. 4. A windturbine runs with an optimum pitch angle depending on wind velocity. If wind velocity is over a rated wind velocity for the windturbine, the windturbine runs, while changing the pitch angle toward a feathering state (in a direction to decrease the inflow angle) to decrease fluid force, namely, the amount of wind incident on the blades for the purpose of keeping the output of generated electric power constant. To stop the windturbine running in this condition where the pitch angle has been increased, if a stop operation is carried out by negative feathering, fluid force temporarily increases (passing a high lift point) and rotational torque increases in the stopping process. This phenomenon results in over-revolving speed in the operation to stop the windturbine.

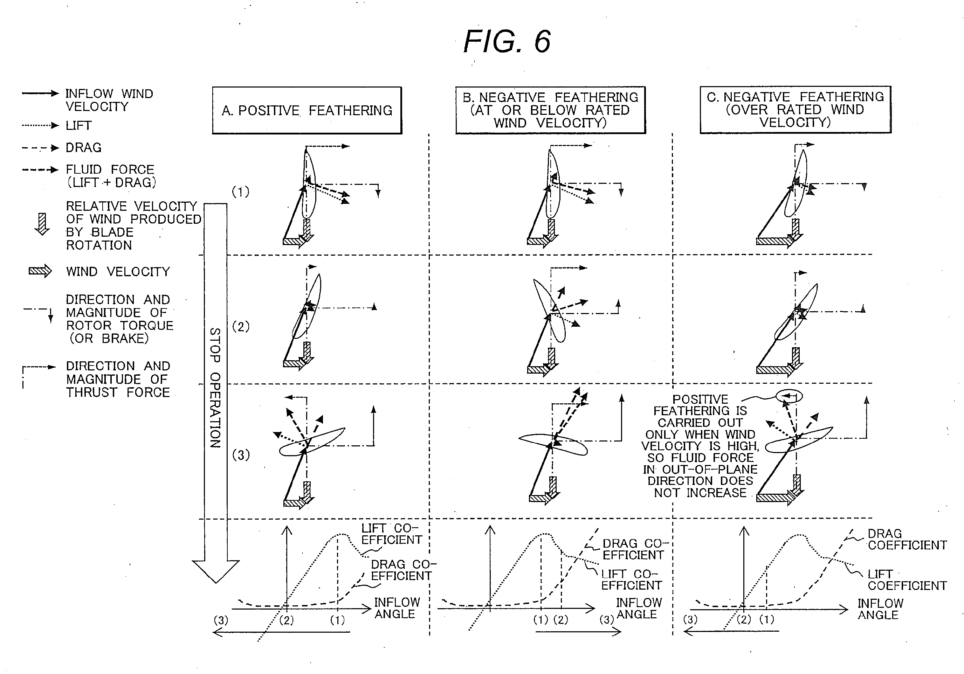

Then, the present inventors found that this problem is solved by adaptive control of feathering, i.e., selectively carrying out either negative or positive feathering depending on windturbine running conditions when stopping the windturbine, as is depicted in Fig. 6. For example, it is arranged to carry out negative feathering if the pitch angle is shallow and to carry out positive feathering if the pitch angle exceeds a predetermined value. If wind velocity is over the rated wind velocity, as described previously, the pitch angle is changed toward a feathering state (in a direction to decrease the inflow angle) and the pitch angle in this situation is larger than the pitch angle when wind velocity is less than or equal to the rated velocity. That is, at a wind velocity that is sufficiently higher than the rated wind velocity, the pitch angle is made larger to decrease the amount of wind energy, as described previously. Wind velocity varies depending on location and time as well as diverse conditions and cannot be described categorically. For example, it is arranged to carry out negative feathering in a pitch angle range of zero to seven degrees and to carry out positive feathering if a pitch angle of seven degrees is exceeded. In other words, negative feathering should be carried out below or around the rated wind velocity and positive feathering should be carried out when wind velocity is sufficiently higher than the rated wind velocity (if a problem of over-revolving speed becomes significant by carrying out negative feathering).

When the positive feathering is carried out, the windturbine is exposed to wind at a high wind velocity over the rated wind velocity. There is a wind inflow whose vector is at a large angle to the rotor plane even when positive feathering is carried out. Lift on a positive pressure surface of a blade, which is generated during positive feathering, is exerted in a direction at a shallow angle to the rotor plane. The load of fluid force during positive feathering can be made smaller than the load during "A. Positive Feathering" in Fig. 6, i.e., positive feathering when stopping the windturbine that runs with wind below the rated wind velocity in the manner heretofore practiced.

Control of pitch angle is performed, taking wind velocity and windturbine revolving speed into account; that is, wind velocity and windturbine revolving speed can be regarded as state quantities correlating with pitch angle. Thus, it is also possible to selectively carry out either negative or positive feathering according to an index that is wind velocity or windturbine revolving speed instead of pitch angle.

As described in the foregoing context, by performing pitch angle control when stopping the windturbine, it is possible to stop the windturbine by negative feathering, if the pitch angle is shallow, without increasing the load acting on the blades. In a case where wind velocity is over the rated wind velocity and the pitch angle becomes larger, it is possible to safely stop the windturbine by positive feathering without giving rise to over-revolving speed. Exactly, it is feasible to reduce the load acting on the windturbine blades, both when the windturbine is running and when it is stopped, the structural strength of the blades can be lowered, and the blades can be made lightweight. Making the blades lightweight can lead to reduction in the weights of the nacelle which supports the rotor (with the blades and hub), the tower which supports the nacelle, and a foundation structure which supports the tower and, in consequence, can significantly contribute to cost reduction of a wind power generation facility.

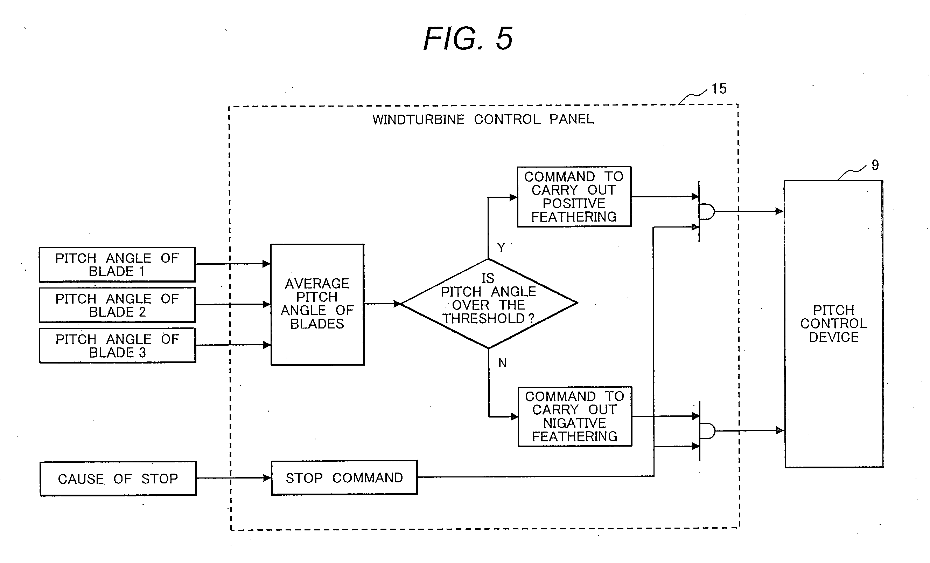

Then, a pitch angle control method of the present invention is described with control block diagrams which are depicted in Fig. 5 and Figs. 7 to 9.

### First Embodiment

Fig. 5 depicts a control block diagram of a first embodiment. The first embodiment is made such that a determination of whether negative feathering or positive feathering should be carried out to stop a windturbine is made according to whether or not an average of the pitch angles of respective blades exceeds a threshold value. The present embodiment assumes that the windturbine has three blades.

Wind velocity is not uniform and varies spatially and temporally. For example, the velocity of wind blowing near the ground is moderate. Hence, each blade is individually controlled so that its pitch angle will be optimal depending on wind velocity. In the first embodiment, the pitch angles of the respective blades are measured and an average of the pitch angles is calculated. A predetermined threshold value (e.g., seven degrees) against which an average pitch angle is compared is set. When executing a stop operation, according to whether or not an average pitch angle exceeds the threshold value in a stop operation, a determination is made as to whether negative feathering or positive feathering should be carried out. If an average pitch angle exceeds the predetermined threshold value, positive feathering is to be carried out to stop the windturbine. If an average pitch angle is less than or equal to the predetermined threshold value, negative feathering is to be carried out to stop the windturbine.

### Second Embodiment

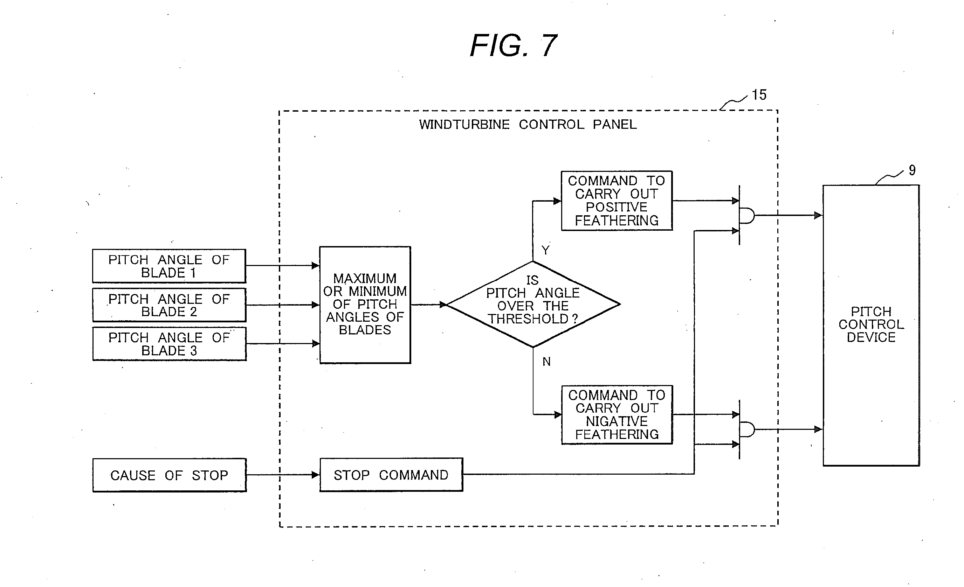

Fig. 7 depicts a control block diagram of a second embodiment. The second embodiment also assumes that the windturbine has three blades. In the second embodiment, a determination of whether negative feathering or positive feathering should be carried out to stop a windturbine is made according to an index that is a maximum or minimum of the pitch angles instead of an average pitch angle. In this case, for example, it is foreseen that, among the blades, one blade may have a larger pitch angle, whereas another blade may have a smaller pitch angle. However, control is exerted such that the same manner of feathering is carried out for the blades with larger or smaller pitch angles, according to a maximum or minimum of the pitch angles. This is because selectively carrying out either negative or positive feathering on a per-blade basis may result in an imbalanced state of the windturbine as a whole.

### Third Embodiment

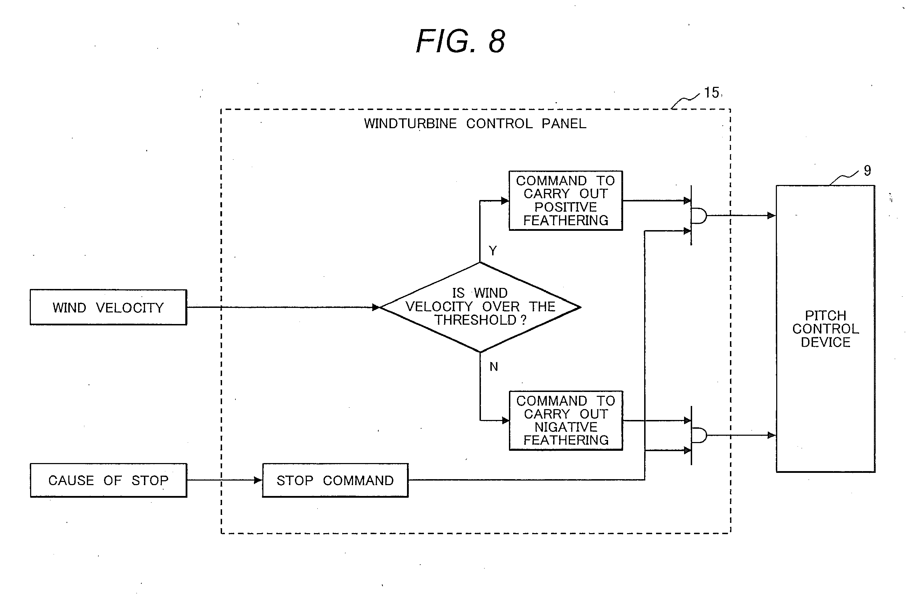

Fig. 8 depicts a control block diagram of a third embodiment. In the third embodiment, a determination of whether negative feathering or positive feathering should be carried out to stop a windturbine is made according to an index that is wind velocity instead of an average pitch angle.

### Fourth Embodiment

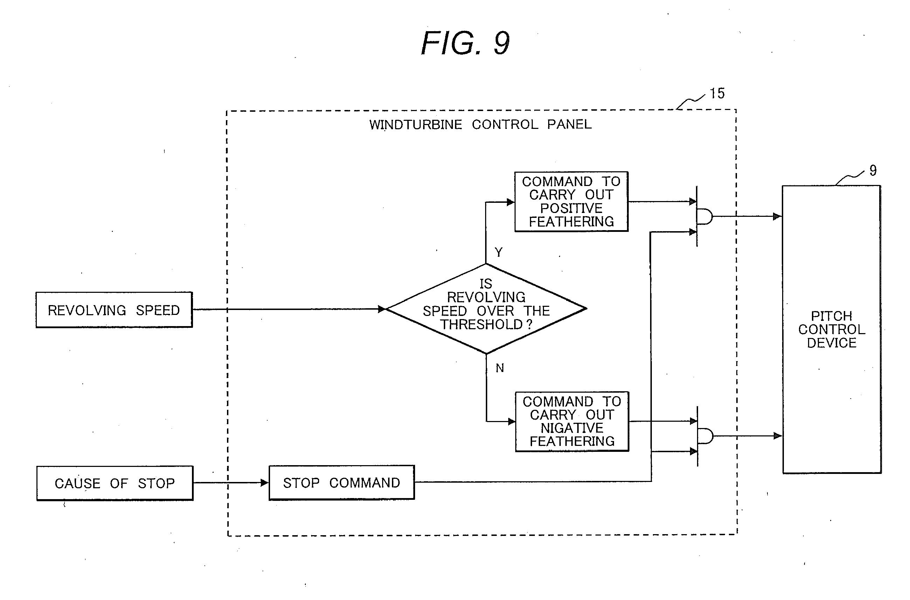

Fig. 9 depicts a control block diagram of a fourth embodiment. In the fourth embodiment, a determination of whether negative feathering or positive feathering should be carried out to stop a windturbine is made according to an index that is windturbine revolving speed instead of an average pitch angle. Unlike wind velocity, windturbine revolving speed may correlate weakly with pitch angle. Windturbine revolving speed is effectively applicable to a windturbine in which its rated revolving speed is reached when the pitch angle is, e.g., approx. seven degrees.

The present invention is not limited to the described embodiments and various modifications are included therein. For example, the foregoing embodiments are those described in detail to explain the present invention clearly and the invention is not necessarily limited to those including all components described. A subset of the components of an embodiment can be replaced by components of another embodiment. To the components of an embodiment, components of another embodiment can be added. For a subset of the components of each embodiment, other components can be added to the subset or the subset can be removed and replaced by other components.

### [Reference Sign List]

- 1:: Blades
- 2:: Hub
- 3:: Main shaft
- 4:: Gearbox
- 5:: Generator
- 6:: Nacelle
- 7:: Tower
- 8:: Pitch drive mechanism
- 9:: Pitch control device
- 10:: Yaw drive mechanism
- 11:: Rotor brake
- 12:: Anemometer
- 13:: Revolving speed sensor
- 14:: Yaw angle sensor
- 15:: Windturbine control panel
- 16:: Power control device
- 17:: Main circuit breaker
- 18:: Emergency Stop button
- 19:: Auxiliary machinery

## Claims

1. A downwind type windturbine, comprising:
blades (1) whose pitch angle is controllable; and
a control device (9, 15) controlling the pitch angle,
**characterized in that**
wherein the control device (9, 15) controls the pitch angle of the blades so that the blades (1) are turned in a direction to increase an inflow angle of the wind incident on the blades (1) and are pitched to a feathering state, when stopping the windturbine.

2. The downwind type windturbine according to claim 1, wherein the control device (9, 15) determines a manner of feathering to stop the windturbine according to an index that is the pitch angle of the blades (1) or a state quantity correlating with the pitch angle at the time of stopping the windturbine and controls the pitch angle of the blades (1) so that the blades (1) are turned in a direction to decrease the inflow angle and are pitched to the feathering state via the inflow angle of zero degree when the pitch angle or the state quantity at the time of stopping the windturbine exceeds a predetermined value.

3. A method of stopping a downwind type windturbine provided with blades (1) whose pitch angle is controllable, comprising:
carrying out a negative feathering by changing a pitch angle of the blades (1) in a direction to increase an inflow angle of the wind incident on the blades (1) to bring the blades (1) to a feathering state, when stopping the windturbine.

4. The method of stopping the downwind type windturbine according to claim 3,
wherein the method further comprises determining a manner of feathering to stop the windturbine according to an index that is the pitch angle of the blades (1) or a state quantity correlating with the pitch angle at the timing of stopping the windturbine and, when the pitch angle or the state quantity at the timing of stopping the windturbine exceeds a predetermine value, carrying out a positive feathering by changing the pitch angle in a direction to decrease the inflow angle to bring the blades (1) to the feathering state via the inflow angle of zero degree.

5. The method of stopping the downwind type windturbine according to claim 4,
wherein the method further comprises selectively carrying out either the negative feathering or the positive feathering which is determined according the index that is an average of the pitch angles of the blades (1).

6. The method of stopping the downwind type windturbine according to claim 4,
wherein the method further comprises selectively carrying out either the negative feathering or the positive feathering which is determined according the index that is a maximum of the pitch angles of the blades (1).

7. The method of stopping the downwind type windturbine according to claim 4,
wherein the method further comprises selectively carrying out either the negative feathering or the positive feathering which is determined according the index that is a minimum of the pitch angles of the blades (1).

8. The method of stopping the downwind type windturbine according to claim 4,
wherein the method further comprises selectively carrying out either the negative feathering or the positive feathering which is determined according the index that is a wind velocity.

9. The method of stopping the downwind type windturbine according to claim 4,
wherein the method further comprises selectively carrying out either the negative feathering or the positive feathering which is determined according the index that is a rotational speed of the windturbine.
